(19) Europäisches Patentamt
European Patent Office
Office européen des brevets

(11) EP 0 901 293 A1

(12) **DEMANDE DE BREVET EUROPEEN**

(43) Date de publication:
**10.03.1999 Bulletin 1999/10**

(51) Int Cl.6: **H04N 11/04**, H04N 7/30

(21) Numéro de dépôt: **98402147.7**

(22) Date de dépôt: **31.08.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **04.09.1997 FR 9711004**

(71) Demandeur: **ALCATEL**
**75008 Paris (FR)**

(72) Inventeur: **Herreros, Yvan**
**91000 Evry (FR)**

(74) Mandataire: **Lamoureux, Bernard et al**
**Compagnie Financiere Alcatel,**
**Département D.P.I.,**
**30, avenue Kléber**
**75016 Paris (FR)**

(54) **Procédé de compression d'un signal à échantillons multidimensionnels**

(57) Le procédé de quantification d'un signal à échantillons multidimensionnels comporte les étapes consistant à:

a) transformer, pour chaque échantillon, chaque composante en un ensemble de coefficients transformés dans N bases de numération connues;
b) réunir les ensembles de coefficients transformés; et
c) procéder à une quantification progressive de la réunion des ensembles de coefficients transformés.

Selon l'invention, pour la réunion des ensembles des coefficients transformés, il comporte les deux étapes successives suivantes :

A) créer, pour chaque échantillon multidimensionnel, un vecteur dont les coefficients sont des N-uplets formés par les coefficients transformés de même rang dans les N bases de transformation des variables caractéristiques; et
B) réunir les vecteurs de N-uplets.

Le procédé comporte enfin la mise en oeuvre d'une quantification progressive de la réunion des vecteurs de N-uplets, la quantification progressive s'effectuant sur les N-uplets.

Application à la compression d'images en couleurs.

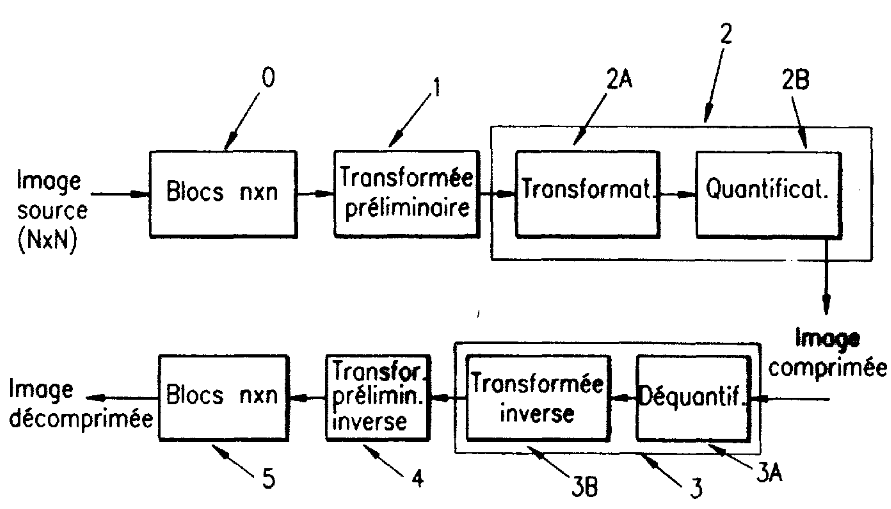


**FIG.1**

EP 0 901 293 A1

## Description

La présente invention concerne un procédé de quantificaion d'un signal à échantillons multidimensionnels comportant au moins un échantillon multidimensionnel de dimension N donnée, le ou chaque échantillon comportant N composantes, le procédé comportant les étapes consistant à :

a) transformer, pour chaque échantillon, chaque composante en un ensemble de coefficients transformés dans N bases de numération connues;
b) réunir les ensembles de coefficients transformés; et
c) procéder à une quantification progressive de la réunion des ensembles de coefficients transformés.

Le procédé est destiné notamment à la compression de signaux représentatifs d'images en couleurs, notamment de télévision, de sons stéréophoniques ou de données résultant de transformées, telles que des transformées de Fourier, des transformées en cosinus discrètes ou des transformées en ondelettes.

Dans ce contexte, chaque signal est formé d'un ensemble d'échantillons multidimensionnels transformés ou non de dimension N donnée. Ainsi, chaque échantillon comporte N composantes.

Dans le cas de la compression d'un ensemble de signaux à échantillons multidimensionnels, les schémas de compression actuels considèrent chaque composante du signal comme un sous-signal indépendant. Chaque sous-signal est d'abord transformé puis quantifié indépendamment des autres sous-signaux transformés du même signal à échantillons multidimensionnels.

Par exemple, les trois plans de couleurs (rouge, vert, bleu) d'une image de télévision en couleurs sont habituellement quantifiés indépendamment les uns des autres.

Une méthode de quantification est par exemple décrite dans l'article de J. Shapiro "Embedded image Coding Using Zerotrees of Wavelet Coefficients", (IEEE Trans. on Signal Processing, vol. 41, n° 12, Dec. 1993).

Les travaux de J. Shapiro concernent un procédé de quantification progressive intégrée d'images à plusieurs niveaux de gris ayant subi une transformation en ondelettes.

La quantification proposée autorise une transmission progressive des données comprimées. La quantification progressive permet qu'une information dégradée puisse être partiellement rétablie à partir de la trame de bits comprimée seulement partiellement reçue.

Ainsi, par un procédé de quantification progressive, la trame de bits obtenue à un haut niveau de compression est le début de la trame de bits obtenue à un niveau de compression plus faible. Autrement dit, augmenter le niveau de compression revient à tronquer la trame de bits pour ne converver que le début de celle-ci.

L'algorithme de J. Shapiro transposé pour le traitement d'images en couleurs, consistant à traiter successivement chaque couleur, ne tient pas compte des corrélations entre les couleurs de sorte que les performances de compression sont affaiblis.

Afin de remédier à ces problèmes, A. Said et W.A. Pearlman ont proposé dans l'article "A new Fast and Efficient Image Codec Based on Set Partitioning In Hierachical Trees" (IEEE trans. on circuits & Systems for Video Technology, vol. 6, n° 3, Jun. 1996) des solutions visant notamment à transformer préalablement les variables caractéristiques correspondant à chacune des couleurs en décorrelant celles-ci, notamment grâce à une méthode d'analyse en composantes principales. Selon cette méthode, les trois couleurs sont préalablement transformées en d'une part une composante de luminance, et d'autre part deux composantes de chrominance. A. Said et W.A. Pearlman ont proposé pour cela une transformation de Karuhnen-Lowe appliquée sur les différentes bandes pour assurer la décorrélation de celles-ci.

Toutefois, le recours à une décorrélation nécessite une transformation supplémentaire relativement longue à effectuer. De plus, cette opération est non réversible à cause des problèmes d'arrondis, ce qui nuit à la qualité de l'image reconstituée, interdisant son utilisation dans certains domaines comme le domaine médical pour des raisons réglementaires.

En outre, suivant ces méthodes, les trames de données comportent successivement les informations relatives à chacune des couleurs, ou si le signal a été préalablement transformé à la luminance puis à la chrominance. Ainsi, la trame doit être transmise complètement afin de permettre une reconstitution satisfaisante de l'image.

En effet, toute transmission partielle de seulement une trame tronquée ne permet de disposer que des premières informations qui sont à elles seules insuffisantes pour reconstituer une image correcte. Le risque existe alors de perdre toutes les informations d'un plan de couleur, ou, si le signal a été préalablement transformé, certaines informations de chrominance.

Pour résoudre ce problème, A. Said et W.A. Pearlman ont proposé de mélanger les composantes formées des variables caractéristiques transformées en entrelaçant celles-ci suivant un tri particulier avant de procéder à la quantification des composantes ainsi réunies.

Toutefois, cette méthode est relativement longue à utiliser puisqu'elle nécessite la mise en oeuvre d'un tri

particulier.

De plus, malgré l'entrelacement des composantes, la quantification s'effectuant sur chaque coefficient scalaire transformé indépendamment de la composante à laquelle il correspond, une trame de données tronquée n'est pas toujours porteuse du même nombre d'informations en ce qui concerne toutes les composantes représentatives de l'image.

Ainsi, ces méthodes ne sont pas complètement satisfaisantes.

L'invention a pour but de proposer un procédé de quantification d'un signal à échantillons multidimensionnels tenant compte de la forte dépendance entre les composantes des échantillons multidimensionnels, tout en permettant une exploitation efficace d'une trame tronquée du signal quantifié.

A cet effet, l'invention a pour objet un procédé de quantification d'un signal à échantillons multidimensionnels comportant au moins un échantillon multidimensionnel de dimension N donnée, le ou chaque échantillon comportant N composantes, le procédé comportant les étapes consistant à :

a) transformer, pour chaque échantillon, chaque composante en un ensemble de coefficients transformés dans N bases de numération connues;
b) réunir les ensembles de coefficients transformés; et
c) procéder à une quantification progressive de la réunion des ensembles de coefficients transformés;
caractérisé en ce que pour la réunion des ensembles des coefficients transformés, il comporte les deux étapes successives suivantes :

A) créer, pour le ou chaque échantillon multidimensionnel, un vecteur dont les coefficients sont des N-uplets formés par les coefficients transformés de même rang i dans les N bases de transformation des variables caractéristiques; et
B) réunir les vecteurs de N-uplets;

le procédé comportant enfin la mise en oeuvre d'une quantification progressive de la réunion des vecteurs de N-uplets, la quantification progressive s'effectuant sur les N-uplets.

Suivant des modes particuliers de réalisation, le procédé peut comporter l'une ou plusieurs des caractéristiques suivantes :

- la transformation de chaque composante de chaque échantillon en un ensemble de coefficients transformés dans N bases de numération connues s'effectue par une transformation directe de chaque échantillon dans une base de numération dont les vecteurs de base sont des N-uplets ;
- la réunion des vecteurs de N-uplets s'effectue suivant l'ordre des échantillons multidimensionnels dans le signal ;
- l'étape de quantification progressive comporte une étape de codage conditionnel de certains éléments d'un même N-uplet en fonction des autres éléments du N-uplet considéré;
- les échantillons multidimensionnels sont obtenus par la transformation préliminaire d'un ensemble d'informations multidimensionnelles comportant chacune N variables caractéristiques, la transformation préliminaire effectuée sur les informations multidimensionnelles étant constituée d'un ensemble de transformations indépendantes opérées chacune sur l'un des N plans constitués des variables caractéristiques de même rang des informations multidimensionnelles ; et
- le signal est un signal représentatif d'une image numérique en couleurs.

L'invention sera mieux comprise à la lecture de la description qui va suivre, donnée uniquement à titre d'exemple et faite en se référant aux dessins sur lesquels :

- la figure 1 est un diagramme schématique montrant le schéma général de la compression et de la décompression d'une image ; et
- la figure 2 est une vue schématique d'un élément d'image de 4 pixels sur 4 pixels sur lequel est représenté un sens de parcours de celui-ci pour sa quantification.

La mise en oeuvre du procédé va maintenant être décrite sur l'exemple de la compression d'un signal à échantillons tri-dimensionnels représentatif d'un élément d'une image de télévision en couleurs de 4 pixels sur 4 pixels.

Sur la figure 1 est modélisé le schéma général de la compression d'une image.

Comme connu en soi, pour comprimer une image de grande taille, on décompose d'abord celle-ci, dans une étape O, en un ensemble de blocs de taille réduite prédéterminée, par exemple de 4 pixels sur 4 pixels, comme représenté sur la figure 2.

Le procédé de compression est ensuite appliqué sur les blocs de taille réduite qui forment des éléments

d'image.

Dans l'exemple décrit ici, le signal comporte 16 informations multidimensionnelles relatives chacune à un pixel. Les informations sont tri-dimensionnelles et comportent ainsi trois variables caractéristiques, notées R, G, B, correspondant chacune à une des trois couleurs (rouge, vert, bleu).

Avant de procéder à la quantification proprement dite, on effectue à l'étape 1 une transformation préliminaire des variables caractéristiques de même rang de l'ensemble des informations multidimensionnelles. L'ensemble des variables caractéristiques de même rang définit un plan correspondant, dans le cas considéré, à l'une des trois ou-leurs.

Ainsi, à l'étape 1, on procède à une transformation de chacun des plans de couleur. En l'espèce, on effectue trois transformations distinctes appliquées chacune sur un plan de couleur. On obtient ainsi, pour chaque pixel, une information multidimensionnelle transformée, appelée échantillon et notée ($\hat{R}$, $\hat{G}$, $\hat{B}$) pour chaque pixel.

De nombreux procédés de transformation peuvent être utilisés. Les transformées efficacement utilisées pour la compression d'image appartiennent à deux groupes principaux, à savoir d'une part les transformées "basées fréquence" qui dérivent de la transformée de Fourier et de ses approximations et d'autre part les transformées "temps-fréquence", dont les représentants les plus connus sont les transformés en ondelettes qui prennent en compte la non stationnarité du signal.

Après mise en oeuvre de la transformation préliminaire, on procède à l'étape de quantification proprement dite notée 2.

Celle-ci comporte d'abord une étape 2A de transformation consistant à transformer, pour chaque échantillon, ici une information relative à un pixel transformée dans un plan couleur, successivement chaque composante, ici l'une des trois couleurs transformées, en un ensemble de coefficients transformés dans trois bases de numération connues, chacune définie pour une composante.

L'étape 2A de transformation conduit ainsi à exprimer, pour chaque échantillon ($\hat{R}$, $\hat{G}$, $\hat{B}$), les trois composantes $\hat{R}$, $\hat{G}$, $\hat{B}$, dans une base de numération de dimension donnée pour chaque composante. Dans l'exemple décrit, les bases associées aux trois composantes sont supposées de dimension k = 8, les coefficients transformés étant des nombres binaires.

Ainsi, les composantes représentatives des trois couleurs s'écrivent sous la forme :

$$\hat{R} = \sum_{i=0}^{7} 2^i r_i$$

$$\hat{G} = \sum_{i=0}^{7} 2^i g_i$$

$$\hat{B} = \sum_{i=0}^{7} 2^i b_i$$

avec ( $r_i$, $g_i$, $b_i$)$\in\{0,1\}^3$ pour $i\in(0;1;2;3;4;5;6;7)$.

Pour chaque pixel, on construit alors un vecteur de dimension k = 8 dont les coefficients sont des tri-uplets formés par les coefficients transformés ($r_i$, $g_i$, $b_i$) de même rang i (avec i appartenant à {0;1;2;3; 4;5;6;7}).

Dans la pratique, pour la transformation de chaque composante de chaque échantillon ($\hat{R}$, $\hat{G}$, $\hat{B}$) en un ensemble de coefficients transformés dans les trois bases de numération connues, on effectue une transformation directe de chaque échantillon ($\hat{R}$, $\hat{G}$, $\hat{B}$) dans une unique base de numération, de dimension 8 dans l'exemple considéré. Dans cette base de numération, les coefficients transformés sont des tri-uplets.

Ainsi, dans cette base, chaque échantillon s'écrit sous la forme :

$$(\hat{R}, \hat{G}, \hat{B}) = \sum_{i=0}^{7} (r_i, g_i, b_i)2^i$$

Dans le procédé selon l'invention, les vecteurs de tri-uplets ainsi formés sont réunis suivant l'ordre des échantillons multidimensionnels dans le signal pour former une matrice de tri-uplets correspondant aux coefficients transformés du signal à échantillons multidimensionnels transformés.

Cet ordre de parcours correspond par exemple à celui représenté sur la figure 2.

Un exemple d'une telle matrice est représenté ci-dessous sous forme de tableau.

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| | RGB | RGB | RGB | RGB | RGB | RGB | RGB | RGB | RGB | RGB | RGB | RGB | RGB | RGB | RGB | RGB |
| 7 | 101 | 000 | 000 | 000 | 000 | 000 | 000 | 000 | 000 | 000 | 000 | 000 | 000 | 000 | 000 | 000 |
| 6 | 110 | 101 | 100 | 000 | 000 | 000 | 000 | 000 | 000 | 000 | 000 | 000 | 000 | 000 | 000 | 000 |
| 5 | 111 | 010 | 011 | 111 | 100 | 000 | 000 | 000 | 000 | 000 | 000 | 000 | 000 | 000 | 000 | 000 |
| 4 | 111 | 111 | 010 | 110 | 011 | 111 | 101 | 000 | 000 | 000 | 000 | 000 | 000 | 000 | 000 | 000 |
| 3 | 110 | 001 | 101 | 001 | 110 | 001 | 110 | 111 | 110 | 100 | 100 | 000 | 000 | 000 | 000 | 000 |
| 2 | 100 | 101 | 001 | 100 | 010 | 001 | 101 | 110 | 001 | 011 | 011 | 101 | 100 | 000 | 010 | 000 |
| 1 | 111 | 010 | 001 | 100 | 011 | 101 | 010 | 101 | 010 | 100 | 010 | 110 | 011 | 111 | 011 | 000 |
| 0 | 111 | 101 | 100 | 010 | 011 | 010 | 001 | 100 | 010 | 101 | 010 | 100 | 010 | 011 | 101 | 111 |

Ainsi, dans ce tableau, les coefficients transformés associés aux vecteurs de base sont numérotés de 7 à 0 du plus significatif au moins significatif et sont indiqués en ligne. Les seize pixels de l'élément d'image considéré sont représentés en colonne et sont numérotés en hexadécimal de 0 à F.

Chaque pixel est ainsi représenté par un vecteur de huit tri-uplets. Le premier élément de chaque tri-uplet correspond au coefficient transformé du rang considéré de la première composante, à savoir le rouge dans l'exemple considéré. Les second et troisième éléments de chaque tri-uplet correspondent respectivement aux coefficients transformés des seconde et troisième composantes, à savoir le vert et le bleu respectivement.

Selon l'invention, on procède ensuite à la quantification progressive des informations regroupées dans le tableau 1. La quantification progressive s'effectue directement sur les tri-uplets.

Dans le cadre du schéma général représenté sur la figure 1, l'étape de quantification progressive notée 2B correspond à la fois à l'étape habituelle de quantification, et à l'étape habituelle de codage. En effet, on entend habituellement par quantification, le processus visant à supprimer les coefficients transformés qui sont porteurs de peu d'informations et qui peuvent être négligés sans perte importante de qualité de l'image. Le codage quant à lui consiste, dans sa forme habituelle, à retranscrire les coefficients transformés quantifiés sous une forme réduisant la longueur de la trame et adaptée pour le traitement ultérieur de l'image comprimée. En l'espèce, la quantification progressive, décrite par exemple par J. Shapiro, permet de procéder simultanément aux opérations de quantification et de codage.

La quantification progressive s'effectue suivant un ordre de parcours de l'élément d'image de seize pixels. Ce parcours peut être de tout type adapté et par exemple suivant l'ordre représenté sur la figure 2.

Ainsi, en notant E le symbole d'échappement, le signal comprimé obtenu par le procédé selon l'invention, n'intégrant que les trois premiers niveaux de poids les plus forts, s'exprime sous la forme : 101E/110101100E/111010011111100E

On comprend qu'avec un tel procédé, toute trame tronquée comporte obligatoirement l'ensemble des informations relatives aux trois couleurs pour le niveau de quantification retenu. En particulier, le nombre de bits pour chaque niveau sera obligatoirement un multiple de trois.

En effet, la quantification étant effectuée directement sur les tri-uplets, il est sûr que toute troncature de la trame de données contiendra des nombres analogues d'éléments représentatifs de chaque couleur.

A partir du signal comprimé avec le niveau de compression retenu, on procède, à l'étape 3, à une "déquantification progressive" du signal représentatif de l'image. Avec les schémas habituellement retenus, cette "déquantification progressive" consiste tout d'abord en une étape de "déquantification" notée 3A, suivie d'une étape de transformation inverse notée 3B, correspondant à l'inverse de l'étape 2A.

Le procédé comporte ensuite, à l'étape 4, une nouvelle étape de transformation inverse correspondant à l'opération inverse de la transformée préliminaire opérée à l'étape 1.

Enfin, afin de reconstituer l'image décomprimée complète, les éléments d'image formés des blocs de taille réduire sont réassemblés les uns aux autres lors de l'étape finale notée 5 sur la figure 1.

Suivant une variante de mise en oeuvre du procédé selon l'invention, l'étape 2B de quantification peut être menée différemment et peut notamment être effectuée de manière conditionnelle.

Dans cette variante, lors de la quantification d'un tri-uplet donné, on laisse inchangé le premier coefficient transformé puis, pour les deux coefficients suivants, on code ceux-ci suivant un codage conditionnel en fonction du codage du premier coefficient transformé du tri-uplet considéré.

Ainsi, pour chaque tri-uplet, les second et troisième coefficients quantifiés sont obtenus à partir de probabilités conditionnelles relatives au premier coefficient du tri-uplet considéré.

Par ailleurs, l'étape 1 de transformation préalable est facultative et peut être omise. Le procédé de quantification selon l'invention est alors mis en oeuvre directement sur les échantillons multidimensionnels dont les composantes ne sont pas des transformées d'informations multidimensionnelles mais les informations multidimensionnelles elles-mêmes.

Il va maintenant être décrit plus généralement le procédé de quantification selon l'invention, à partir d'un exemple d'algorithme présenté en pseudo-code.

Considérant un signal formé d'un ensemble d'échantillons C. Chaque échantillon C est constitué de N composantes $C_0$, ..., $C_{N-1}$.

Pour réaliser la quantification progressive on se donne deux relations d'ordre compatibles :

- un ordre (total) de parcours des échantillons (noté <) ;
- un ordre (partiel) de dépendance logique (noté <<) tel que pour deux échantillons $x<<y \Rightarrow x<y$

Dans le codage "zerotree" par exemple, défini par J. Shapiro, << est l'ordre de descendance dans un arbre, et < est un ordre classique de parcours de l'arbre (profondeur ou largeur d'abord).

En désignant de la manière suivante les coefficients d'une matrice 4x4 représentative d'un élément d'image de 4 pixels sur 4 pixels :

| | | | |
|---|---|---|---|
| (0,0) | (0,1) | (0,2) | (0,3) |
| (1,0) | (1,1) | (1,2) | (1,3) |
| (2,0) | (2,1) | (2,2) | (2,3) |
| (3,0) | (3,1) | (3,2) | (3,3) |

l'ordre correspondant au codage "zerotree" est défini par :
pour (i,j ) différent de (0,0)
(2i,2j )<<(i,j)
(2i+1,2j )<<(i,j)
(2i,2j+1)<<(1,j)
(2i+1,2j+1)<<(1,j)

on peut choisir pour < l'un des ordres suivants (décroissants)

- Parcours en profondeur d'abord (0,0)(**0,1**)(0,2)(0,3)(1,2)(1,3)(**1,0**)(2,0)(2,1)(3,0)(3,1)(**1,1**) (2,2)(2,3)(3,2)(3,3)
- Parcours en largeur d'abord (0,0)(**0,1**)(**1,0**)(**1,1**)(0,2)(0,3)(1,2)(1,3)(2,0)(2,1)(3,0)(3,1) (2,2)(2,3 )(3,2)(3,3)

La base de numération de $R^N$ utilisée ici est la base classique des puissances de 2, les coefficients de la décomposition (coefficients transformés) associés à chaque vecteur de la base sont des N-uplets.

De plus, on dit qu'un échantillon est significatif par rapport à un seuil S si une de ses composantes est supérieure ou égale (en valeur absolue) à S.

Pour le codage d'un échantillon, deux cas sont possibles :

si l'échantillon n'a jamais été codé
l'ensemble des symboles est $\{-1, 0,\})^N$ plus le symbole d'échappement E
si l'échantillon a déjà été codé
l'ensemble des symboles est $\{0, \})^N$

Si tous les échantillons inférieurs à C (pour l'ordre <<) sont non significatifs pour le seuil S, on dit que C est une racine de 0 pour S.

Afin de définir l'algorithme, on détermine k, la plus grande puissance de 2 inférieure au plus grand (en valeur absolue) échantillon différent de O.

L'algorithme en pseudo code s'écrit alors sous la forme :
pour p décroissant de k à 0
pour tous les échantillons C par ordre de parcours décroissant (pour <)
si l'échantillon courant P n'a jamais été codé (pas encore été considéré comme significatif)
s'il n'est pas significatif par rapport à $2^P$
s'il est inférieur (pour <<) à un échantillon pour lequel on a codé un symbole d'échappement E (une racine de zéros)
on passe à l'échantillon suivant sinon si tous les échantillons inférieurs à P (pour <<) sont non significatifs par rapport à $2^P$
on code le symbole d'échappement E
sinon (en variante)
on code le symbole (0, ... 0)
sinon
pour chacune des composantes de l'échantillon
si la composante est supérieure ou égale à $2^P$
on pose $C_n = 1$
sinon si composante est inférieure ou égale à $-2^P$
on pose $C_n = -1$
sinon
on pose $C_n = 0$
on code le symbole $(c_0,...,c_{n-1})$ différent de (0,...,0)
sinon
pour chacune des composantes de l'échantillon
on pose $C_n$ = la valeur du $p^{ème}$ bit de la valeur absolue de la composante

on code le symbole $(c_0,...,c_{n-1})$

Plus généralement, le procédé selon l'invention peut se définir de la manière suivante, les échantillons C étant des éléments de $R^N$ (avec R ensemble des nombres réels).

On définit une base de numération dans $R^N$ par les éléments suivants :

- une suite B strictement croissante de réels $B_k$ ($k \in Z$ avec Z ensemble des entiers relatifs)(en général, $B_k=2^k$)
- un ensemble fini S d'éléments de $R^N$ comprenant le vecteur nul, ces éléments sont nommés les chiffres (en général on prend $S = \{-1, 0, 1\}^N$ ou $\{0, 1)^N$)

B et S doivent vérifier la propriété suivante :

tout vecteur X de $R^N$ peut s'écrire (de façon unique ou non) sous la forme

$$X = \sum_{k \in Z} x_k B_k \ (x_k \in S)$$

On dit qu'une écriture

$$X = \sum_{k<K} x_k B_k$$

de X est minimale si

- $x_{K-1}$ non nul
- il n'existe pas d'écriture de la forme

$$X = \sum_{k<K-1} x_k B_k$$

On dit qu'un vecteur X est non significatif par rapport à $B_k$ s'il existe une écriture minimale de X avec $x_i=0$ pour $1 \geq k$.

On suppose que tous les échantillons sont écrits sous une forme minimale et on détermine K, la plus grande valeur de k nécessaire pour écrire tous les échantillons.

L'algorithme du procédé selon l'invention s'écrit alors sous la forme :

pour k décroissant de K à 0
pour tous les échantillons par ordre de parcours décroissant (pour <)
    si l'échantillon courant

$$P = \sum_{k \leq K} p_k B_k$$

n'a jamais été
    codé (pas encore été considéré comme significatif)
        s'il n'est pas significatif par rapport à
        $B_k(p_k=\ldots =p_k=0)$
            s'il est inférieur (pour <<) à un échantillon pour lequel on a codé un symbole
            d'échappement (une racine de zéros)
                on passe à l'échantillon suivant
            sinon si tous les échantillons inférieurs à P(pour <<) sont non significatifs par rapport à $B_k$
                on code le symbole d'échappement E sinon (en variante)
                on code le symbole (chiffre) correspondant au vecteur nul
        sinon
            on code le chiffre $p_k$

sinon

on code le chiffre $p_k$.

## Revendications

**1.** Procédé de quantification d'un signal à échantillons multidimensionnels comportant au moins un échantillon multidimensionnel de dimension N donnée, le ou chaque échantillon comportant N composantes ($\hat{R}$, $\hat{G}$, $\hat{B}$), le procédé comportant les étapes consistant à :

a) transformer, pour chaque échantillon, chaque composante ($\hat{R}$, $\hat{G}$, $\hat{B}$) en un ensemble de coefficients transformes ($r_i$, $g_i$, $b_i$) dans N bases de numération connues;

b) réunir les ensembles de coefficients transformés; et

c) procéder à une quantification progressive de la réunion des ensembles de coefficients transformés;

caractérisé en ce que pour la réunion des ensembles des coefficients transformés, il comporte les deux étapes successives suivantes :

A) créer, pour le ou chaque échantillon multidimensionnel, un vecteur dont les coefficients sont des N-uplets formés par les coefficients transformés ($r_i$, $g_i$, $b_i$) de même rang i dans les N bases de transformation des variables caractéristiques; et

B) réunir les vecteurs de N-uplets;

le procédé comportant enfin la mise en oeuvre d'une quantification progressive de la réunion des vecteurs de N-uplets, la quantification progressive s'effectuant sur les N-uplets.

**2.** Procédé selon la revendication 1, caractérisé en ce que la transformation de chaque composante de chaque échantillon ($\hat{R}$, $\hat{G}$, $\hat{B}$) en un ensemble de coefficients transformés ($r_i$, $g_i$, $b_i$) dans N bases de numération connues s'effectue par une transformation directe de chaque échantillon ($\hat{R}$, $\hat{G}$, $\hat{B}$) dans une base de numération dont les vecteurs de base sont des N-uplets.

**3.** Procédé selon la revendication 1 ou 2, caractérisé en ce que la réunion des vecteurs de N-uplets s'effectue suivant l'ordre des échantillons multidimensionnels dans le signal.

**4.** Procédé selon l'une quelconque des revendications précédentes, caractérisé en ce que l'étape de quantification progressive comporte une étape de codage conditionnel de certains éléments d'un même N-uplet en fonction des autres éléments du N-uplet considéré.

**5.** Procédé selon l'une quelconque des revendications précédentes, caractérisé en ce que les échantillons multidimensionnels ($\hat{R}$, $\hat{G}$, $\hat{B}$) sont obtenus par la transformation préliminaire d'un ensemble d'informations multidimensionnelles (R, G, B) comportant chacune N variables caractéristiques, la transformation préliminaire effectuée sur les informations multidimensionnelles (R, G, B) étant constituée d'un ensemble de transformations indépendantes opérées chacune sur l'un des N plans constitués des variables caractéristiques de même rang des informations multidimensionnelles.

**6.** Procédé selon l'une quelconque des revendications précédentes, caractérisé en ce que le signal est un signal représentatif d'une image numérique en couleurs.

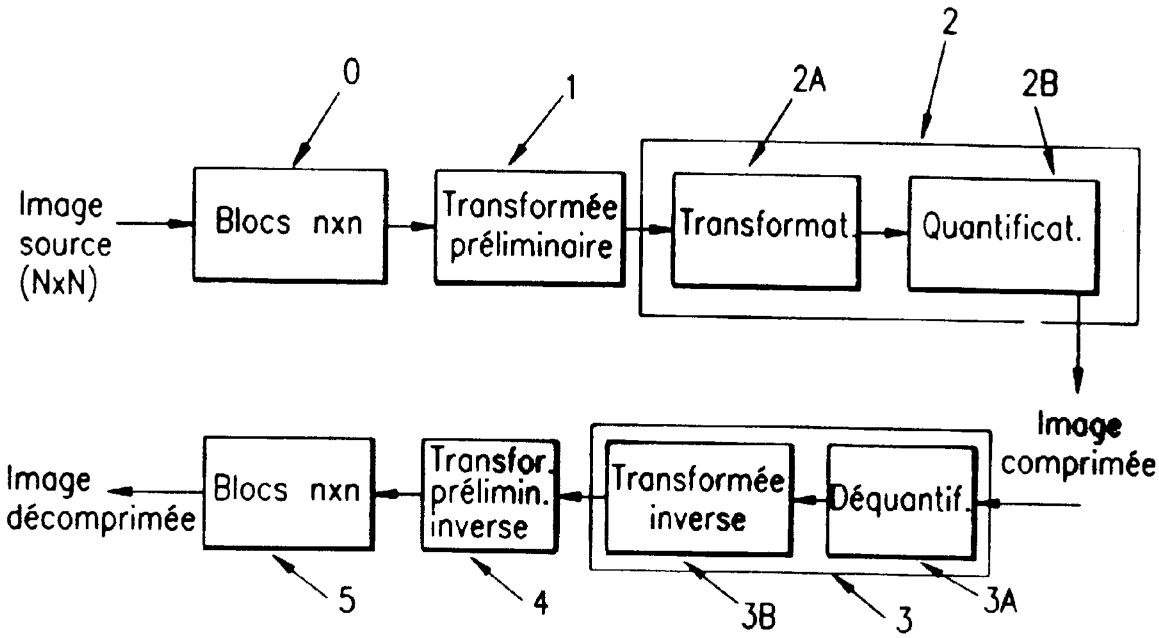
0
1
2
2A
2B
Image source (NxN)
Blocs nxn
Transformée préliminaire
Transformat.
Quantificat.
Image comprimée
Image décomprimée
Blocs nxn
Transfor. prélimin. inverse
Transformée inverse
Déquantif.
5
4
3B
3
3A

FIG.1

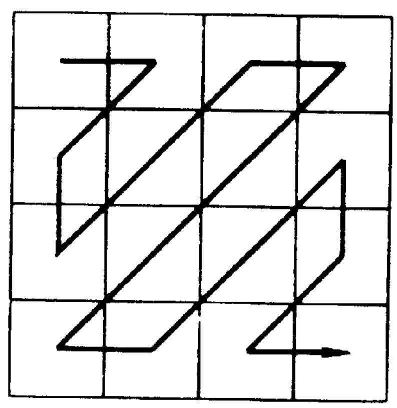

FIG.2

Office européen des brevets

# RAPPORT DE RECHERCHE EUROPEENNE

Numéro de la demande
EP 98 40 2147

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | SHAPIRO J M: "EMBEDDED IMAGE CODING USING ZEROTREES OF WAVELET COEFFICIENTS" 1 décembre 1993 , IEEE TRANSACTIONS ON SIGNAL PROCESSING, VOL. 41, NR. 12, PAGE(S) 3445 - 3462 XP000426658 --- | 1,6 | H04N11/04<br>H04N7/30 |
| A | EP 0 107 072 A (SIEMENS AG) 2 mai 1984<br>* page 2, ligne 18 - page 3, ligne 23 *<br>* page 4, ligne 13 - page 5, ligne 23; figure *<br>----- | 1,6 | |
| | | | DOMAINES TECHNIQUES RECHERCHES (Int.Cl.6) |
| | | | H04N |

Le présent rapport a été établi pour toutes les revendications

| Lieu de la recherche | Date d'achèvement de la recherche | Examinateur |
|---|---|---|
| LA HAYE | 23 novembre 1998 | Fuchs, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)